(19) Europäisches Patentamt / European Patent Office / Office européen des brevets

(11) **EP 4 365 762 A1**

(12) **EUROPEAN PATENT APPLICATION**

(43) Date of publication:
**08.05.2024 Bulletin 2024/19**

(21) Application number: **23208315.4**

(22) Date of filing: **07.11.2023**

(51) International Patent Classification (IPC):
**G06F 21/60** (2013.01)   **G06N 3/08** (2023.01)
**G06V 10/82** (2022.01)   **H04L 9/06** (2006.01)

(52) Cooperative Patent Classification (CPC):
**G06F 21/602; G06N 3/08; G06V 10/82; H04L 9/065**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **07.11.2022 DE 102022211732**

(71) Applicant: **Fraunhofer-Gesellschaft zur Förderung der angewandten Forschung e.V.**
**80686 München (DE)**

(72) Inventors:
• **CHAKRABARTY, Soumitro**
**91058 Erlangen (DE)**
• **MABANDE, Edwin**
**91058 Erlangen (DE)**

• **THIERGART, Oliver**
**91058 Erlangen (DE)**
• **WILD, Moritz**
**91058 Erlangen (DE)**
• **MAHNE, Dirk**
**91058 Erlangen (DE)**
• **KEMPAPURA SRINIVASA, Shashi Kumar**
**91058 Erlangen (DE)**
• **SHETU, Shrishti Saha**
**91058 Erlangen (DE)**
• **VITTAPPAN, Sharvin**
**91058 Erlangen (DE)**

(74) Representative: **Schairer, Oliver Michael**
**Schoppe, Zimmermann, Stöckeler Zinkler, Schenk & Partner mbB Patentanwälte Radlkoferstraße 2 81373 München (DE)**

(54) **APPARATUS AND METHOD FOR DEEP LEARNING MODEL PROTECTION**

(57) An apparatus according to an embodiment is provided. The apparatus comprises an input reconstruction unit 110 configured to receive modified input data that has been generated from first data according to a first modification rule, and configured to reconstruct the first data according to a first reconstruction rule from the modified input data. Moreover, the apparatus comprises a machine-trained processing unit 120 for receiving the first data from the input reconstruction unit 110, and configured for generating resulting data from the first data.

FIG 1A

**Description**

The present invention relates to deep learning model protection, to an apparatus and a method for deep learning model protection, and, in particular, to deep learning model protection in DNN based processing, for example, audio processing. In particular, embodiments relate to protection of DNN models designed for audio-processing (or any other multi-dimensional input, e.g., image video, text etc.) from unauthorized usage.

It should be noted that though described mainly in the context of audio-processing, the provided concepts can also be used for DNN models designed for other multi-dimensional inputs, e.g., image, video, text etc.

Deep learning-based solutions to problems in audio signal processing results in a deep neural network (DNN) model that is generally stored as a file on disk.

Often, unauthorized usage of a DNN model, for example, designed for audio processing, shall be restricted.

Most methods in literature suggest a passive approach to this issue, where different kind of watermarking methods are proposed to detect and identify illegal usage of the DNN model [1].

In [2], a more active approach is proposed that either trains a deep learning model that can work with encoded data and for this, an additional encoder is used, or an encoderdecoder scheme is used where different realizations of the encoder and decoder can be used in conjunction with the main model. In a particular context, an active approach to restrict unauthorized usage is required and compared to [2], the following are the main differences: In [2], only encoding-decoding input data to the DNN is considered. In [2], additional encoder and decoder for the input data are included to restrict the unauthorized usage of the DNN, and a training process is devised to properly include the encoding-decoding scheme.

The object of the present invention is to provide improved concepts for deep learning model protection. The object of the present invention is solved by the subject-matter of the independent claims. Particular embodiments are provided in the dependent claims.

An apparatus according to an embodiment is provided. The apparatus comprises an input reconstruction unit configured to receive modified input data that has been generated from first data according to a first modification rule, and configured to reconstruct the first data according to a first reconstruction rule from the modified input data. Moreover, the apparatus comprises a machine-trained processing unit for receiving the first data from the input reconstruction unit, and configured for generating resulting data from the first data.

Moreover, an apparatus according to another embodiment is provided. The apparatus comprises a machine-trained processing unit for receiving first data and for generating resulting data from the first data. Furthermore, the apparatus comprises an output modification unit. The machine-trained processing unit is configured to feed the resulting data into the output modification unit. The output modification unit is configured to modify the resulting data according to a second modification rule to obtain and to output modified output data. Moreover, the output modification unit is configured to generate the modified output data such that the resulting data is reconstructable from the modified output data by applying a second reconstruction rule on the modified output data.

Furthermore, a method according to an embodiment is provided. The method comprises:

- Receiving, by an input reconstruction unit, modified input data that has been generated from first data according to a first modification rule, and reconstructing, by the input reconstruction unit, the first data according to a first reconstruction rule from the modified input data. And:

  - Receiving the first data by a machine-trained processing unit from the input reconstruction unit, and generating resulting data from the first data by the machine-trained processing unit.

Moreover, a method according to another embodiment is provided. The method comprises:

- Receiving first data by a machine-trained processing unit and generating resulting data from the first data by the machine-trained processing unit. And:

  - Feeding the resulting data by the machine-trained processing unit into an output modification unit.

The output modification unit modifies the resulting data according to a second modification rule to obtain modified output data, and outputting the modified output data by the output modification unit, wherein generating the modified output data by the output modification unit is conducted such that the resulting data is reconstructable from the modified output data by applying a second reconstruction rule on the modified output data.

Furthermore, a computer program according to an embodiment for implementing one of the above-described methods when being executed on a computer or signal processor is provided.

In the following, embodiments of the present invention are described in more detail with reference to the figures, in which:

Fig. 1a     illustrates an apparatus according to an embodiment, wherein the apparatus comprises an input reconstruction unit and a machine-trained processing unit.

Fig. 1b     illustrates an apparatus according to another embodiment, wherein the apparatus comprises a machine-trained processing unit and output modification unit.

Fig. 1c illustrates an apparatus according to a further embodiment, wherein the apparatus comprises the input reconstruction unit, the machine-trained processing unit and the output reconstruction unit.

Fig. 2 illustrates a pre-DNN signal processing block, a DNN model and a post-DNN signal processing block according to an embodiment.

Fig. 3 illustrates a DNN model according to an embodiment, which comprises a DNN processing module and an output scrambling module.

Fig. 4 illustrates post-DNN processing according to an embodiment.

Fig. 5 illustrates pre-DNN processing according to an embodiment.

Fig. 6 illustrates a DNN model according to an embodiment, which comprises an input unscrambling module and a DNN processing module.

Fig. 7 illustrates a first two-dimensional vector of indices according to an embodiment.

Fig. 8 illustrates a second two-dimensional vector of indices according to an embodiment.

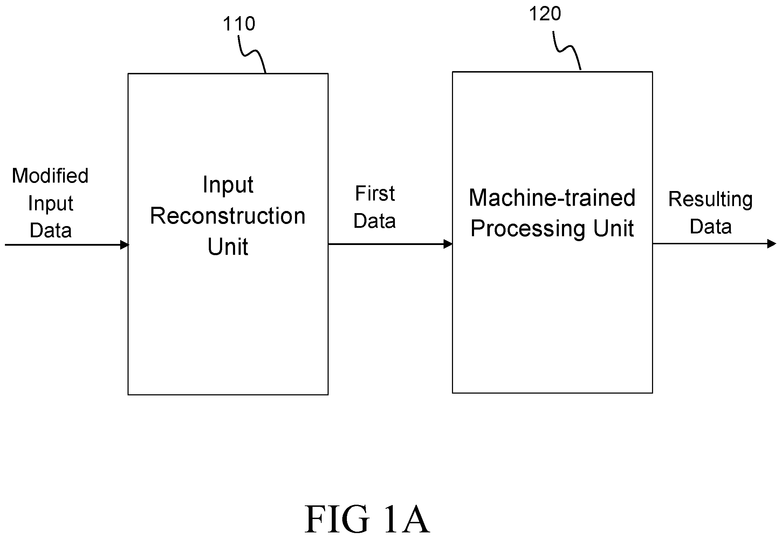

Fig. 1a illustrates an apparatus according to an embodiment.

The apparatus comprises an input reconstruction unit 110 configured to receive modified input data that has been generated from first data according to a first modification rule, and configured to reconstruct the first data according to a first reconstruction rule from the modified input data.

Moreover, the apparatus comprises a machine-trained processing unit 120 for receiving the first data from the input reconstruction unit 110, and configured for generating resulting data from the first data.

According to an embodiment, the first data comprises a signal, such as audio or image/video or general sensor data.

In an embodiment, the first modification rule comprises one or more scrambling steps, and the first reconstruction unit comprises one or more unscrambling steps.

According to an embodiment, the first modification rule comprises one or more encryption steps, and the first reconstruction unit comprises one or more decryption steps.

In an embodiment, the first modification rule comprises one or more invertible linear operations and/or one or more invertible non-linear operations; and the first reconstruction rule comprises one or more further linear operations, which invert the one or more invertible linear operations, and/or one or more further non-linear operations, which invert the one or more invertible non-linear operations of the first modification rule.

According to an embodiment, the first data comprises audio data, wherein the resulting data comprises information on one or more properties of the audio data. The first modification rule comprises one or more functions.

In an embodiment, the one or more functions comprise a trigonometric function, and/or a power function, and/or a log function, and/or another function.

According to an embodiment, the first data may, e.g., exhibit one or more dimensions, and the first modification rule and the first reconstruction rule may, e.g., depend on the two or more dimensions of the first data.

In an embodiment, each of the first data and of the modified input data may, e.g., comprise a plurality of data values. Each data value of the plurality of data values of the first data and of the modified input data may, e.g., exhibit at least a first dimensional location with respect to a first dimension of the two or more dimensions and may, e.g., exhibit a second dimensional location with respect to a second dimension of the two or more dimensions. The first reconstruction rule may, e.g., be defined such that by applying the first reconstruction rule on the modified input data. Each of at least two data values of the plurality of data values of the modified input data may, e.g., be shifted from an initial first dimensional location to a different first dimensional location and from an initial second dimensional location to a different second dimensional location, to obtain the first data.

According to an embodiment, the first data may, e.g., be time-frequency audio data having time as the first dimension and having frequency as the second dimension. The first reconstruction rule may, e.g., be defined to shift each of the at least two data values of the plurality of data values of the modified input data from an initial first dimensional location, being an initial time index or initial point-in-time, to a different first dimensional location, being a different time index or different point-in-time, and an initial second dimensional location, being an initial frequency index or initial frequency or initial frequency band, to a different second dimensional location, being a different frequency index or different frequency or different frequency band.

In an embodiment, the first reconstruction rule defines how to scramble the plurality of data values of the modified input data to reconstruct the plurality of data values of the first data by defining two or more reordering steps, wherein each of the two or more reordering steps defines an updated first dimensional location with respect to the first dimension and an updated second dimensional location with respect to the second dimension for each of the plurality of data values of the modified input data.

According to an embodiment, each of the two or more reordering steps of the first reconstruction rule defines a scrambling of a plurality of indices of two or more index vectors to obtain an update of the two or more index vectors. Each of the two or more index vectors may, e.g., be associated with a dimension of the two or more dimensions. Each of the indices of one of the two or more index vectors may, e.g., be associated with a dimensional location within the dimension of said one of the two or more index vectors.

In an embodiment, the first reconstruction rule may, e.g., define how to scramble the plurality of data values of the modified input data to reconstruct the plurality of data values of the first data by defining a single reordering step, wherein said single reordering step may, e.g., define an updated first dimensional location with respect to the first dimension and an updated second dimensional location with respect to the second dimension for each of the plurality of data values of the modified input data.

According to an embodiment, said single reordering step of the first reconstruction rule may, e.g., define a scrambling of a plurality of indices of two or more predefined index vectors. Each of the two or more predefined index vectors may, e.g., be associated with a dimension of the two or more dimensions. Each of the indices of one of the two or more predefined index vectors may, e.g., be associated with a dimensional location within the dimension of said one of the two or more index vectors.

In an embodiment, the apparatus may, e.g., further comprise a pre-processor; being configured to generate the modified input data from the first data according to the first modification rule, and being configured to feed the modified input data into the input reconstruction unit 110 of the apparatus.

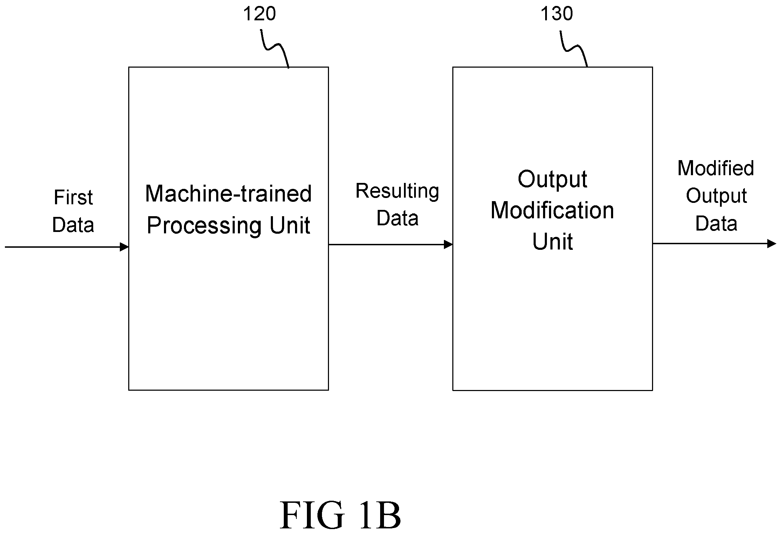

Fig. 1b illustrates an apparatus according to another embodiment.

The apparatus comprises a machine-trained processing unit 120 for receiving first data and for generating resulting data from the first data.

Furthermore, the apparatus comprises an output modification unit 130.

The machine-trained processing unit 120 is configured to feed the resulting data into the output modification unit 130.

The output modification unit 130 is configured to modify the resulting data according to a second modification rule to obtain and to output modified output data. Moreover, the output modification unit 130 is configured to generate the modified output data such that the resulting data is reconstructable from the modified output data by applying a second reconstruction rule on the modified output data.

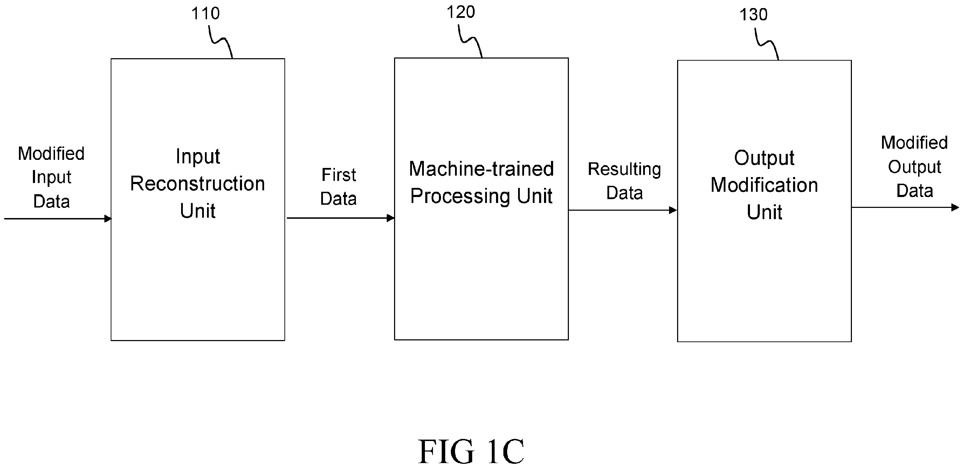

Fig. 1c illustrates an apparatus according to a further embodiment, wherein the apparatus comprises the input reconstruction unit, the machine-trained processing unit and the output reconstruction unit.

According to an embodiment, the second modification rule may, e.g., comprise one or more scrambling steps, and the second reconstruction unit may, e.g., comprise one or more unscrambling steps.

In an embodiment, the second modification rule may, e.g., comprise one or more encryption steps, and the second reconstruction unit comprises one or more decryption steps.

According to an embodiment, the second modification rule may, e.g., comprise one or more invertible linear operations and/or one or more invertible non-linear operations. The second reconstruction rule may, e.g., comprise one or more further linear operations, which invert the one or more invertible linear operations, and/or one or more further non-linear operations, which invert the one or more invertible non-linear operations of the second modification rule.

In an embodiment, the first data may, e.g., comprise audio data. The resulting data may, e.g., comprise information on one or more properties of the audio data. At least one of the one or more non-linear operations of the second modification rule may, e.g., comprise one or more functions.

In an embodiment, the one or more functions may, e.g., comprise a trigonometric function, and/or a power function, and/or a log function, and/or another function.

According to an embodiment, the resulting data may, e.g., exhibit two or more dimensions. The second modification rule and the second reconstruction rule may, e.g., depend on the two or more dimensions of the resulting data.

In an embodiment, each of the resulting data and of the modified output data may, e.g., comprise a plurality of data values. Each data value of the plurality of data values of the resulting data and of the modified output data may, e.g., exhibit at least a first dimensional location with respect to a first dimension of the two or more dimensions and may, e.g., exhibit a second dimensional location with respect to a second dimension of the two or more dimensions. The second modification rule may, e.g., be defined such that by applying the second modification rule on the resulting data, each of at least two data values of the plurality of data values of the resulting data may, e.g., be shifted from an initial first dimensional location to a different first dimensional location and from an initial second dimensional location to a different second dimensional location, to obtain the modified output data.

According to an embodiment, the second modification rule may, e.g., define how to scramble the plurality of data values of the resulting data to obtain the plurality of data values of the modified output data by defining two or more reordering steps. Each of the two or more reordering steps may, e.g., define an updated first dimensional location with respect to the first dimension and an updated second dimensional location with respect to the second dimension for each of the plurality of data values of the resulting data.

In an embodiment, each of the two or more reordering steps of the second modification rule may, e.g., define a scrambling of a plurality of indices of two or more index vectors to obtain an update of the two or more index vectors. Each of the two or more index vectors may, e.g., be associated with a dimension of the two or more dimensions. Each of the indices of one of the two or more index vectors may, e.g., be associated with a dimensional location within the dimension of said one of the two or more index vectors.

According to an embodiment, the second modification rule may, e.g., define how to scramble the plurality of data values of the resulting data to obtain the plurality of data values of the modified output data by defining a single reordering step, wherein said single reordering step may, e.g., define an updated first dimensional location with respect to the first dimension and an updated second dimensional location with respect to the second dimension for each of the plurality of data values of the resulting data.

In an embodiment, said single reordering step of the second reconstruction rule may, e.g., define a scrambling of a plurality of indices of two or more predefined index vectors. Each of the two or more predefined index vectors may, e.g., be associated with a dimension of the two or more dimensions. Each of the indices of one of the two or more predefined index vectors may, e.g., be associated with a dimensional location within the dimension of said one of the two or more index vectors.

According to an embodiment, the apparatus may, e.g., further comprise a post-processor being configured to receive the modified output data from the output modification unit 130 of the apparatus, and being configured to reconstruct the resulting data from the modified output data according to the second reconstruction rule.

In an embodiment, the resulting data may, e.g., comprise a natural signal, such as audio or image/video or general sensor data, and/or information on one or more properties of the first data.

According to an embodiment, the machine-trained processing unit 120 may, e.g., be a processing unit which may, e.g., comprise a neural network. The neural network may, e.g., be configured to generate the processing output data from the processing input data.

In the following, particular embodiments and concepts on which the present invention is based are described.

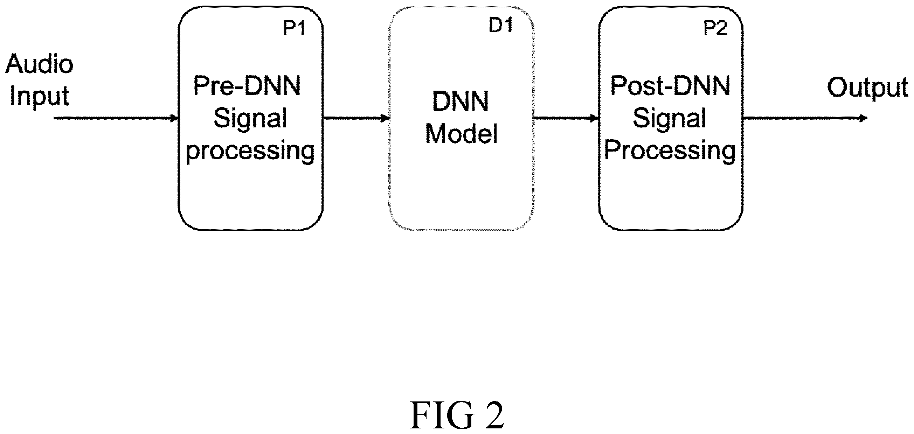

During inference/deployment, the DNN model is to be loaded onto the memory and the typical processing flow for such a solution is shown in Fig. 2.

Fig. 2 illustrates a pre-DNN signal processing block, a DNN model and a post-DNN signal processing block according to an embodiment.

Given the audio input, first some pre-processing in block P1 of Fig. 2 is applied to the audio to either extract features that serve as the input representation for the DNN model or perform some form of dimensional alignment to conform to the input dimension requirements of the DNN model. In the case of the DNN model corresponding to a single processing module within an audio processing solution that comprises different such modules, block P1 of Fig. 2 may, e.g., also comprise the other modules where traditional signal processing for different tasks is performed, and the output of these preceding modules are then given as input to the DNN model.

The DNN model in block D1 of Fig. 2 then processes the input to perform the task for which it is designed. The output of the DNN may, e.g., then be further processed in block P2 of Fig. 2 or in the case of the DNN model being part of a multi-module audio processing solution, the DNN output is provided as input to the succeeding modules in the processing chain leading to the final desired output.

When such a solution is to be deployed on a device, then the DNN model might need to be separately provided as a part of the complete technology. In this case, it becomes essential to ensure that provided DNN model cannot be easily used without authorization in other setups by the users. The provided concepts are also suitable for general prevention of unauthorized usage of DNN models.

According to embodiments, without access to the encoded data or the encoding scheme, unauthorized users can be restricted from using the deep learning models.

In embodiments, both input or/and output of the DNN can be obfuscated/scrambled to achieve the necessary protection from unauthorized usage.

Embodiments for DNN protection require no changes/modifications during training. The DNN model can be trained normally, with the protection features included only during inference.

In the following, basic concepts of embodiments of the present invention are described. It should be noted that though described mainly in the context of audio-processing, the methods can also be used for DNN models designed for other multi-dimensional inputs, e.g., image, video, text etc.

The idea proposed here pertains to restrict the unauthorized usage of a DNN model, for example, designed for audio processing.

Embodiments provide DNN Data Obfuscation (DDO). The idea is to obfuscate either the input or the output of the DNN such that the model is not able to give the desired output unless this procedure is reversed. In provided embodiments, no special training is required. The security feature is activated only during inference time.

Some embodiments may, e.g., provide a scrambling/obfuscation function. Given the original input/output of the DNN is a vector/matrix X, the scrambling function is given by

$$Y = f(X)$$

where *f* is the scrambling function and *Y* is the scrambled version of the DNN input/output. In embodiments, the operation defined by *f* can be reversed.

As an example for perfect reconstruction, to get back X from Y, for any scrambling function *f* there exists another function g that is the inverse of the function f, i.e.,

$$g(Y) = g(f(X)) = X$$

It should be noted that, for this example, the scrambling function is reversible if the dimensions of the vector/matrix *Y* are equal to or larger than those of *X.*

Now, output scrambling/obfuscation according to embodiments is described.

For output scrambling/obfuscation, a first approach would be to obfuscate/scramble the output of the DNN such that if the model is used without authorization, it does not provide the desired output.

The proposed method is mainly effective and suitable for audio processing tasks where the DNN model provides an audio output which can be waveform or time-frequency representation or even a time-frequency mask. To generalize, it is mainly effective for tasks where the output of the DNN is a non-sparse vector/matrix.

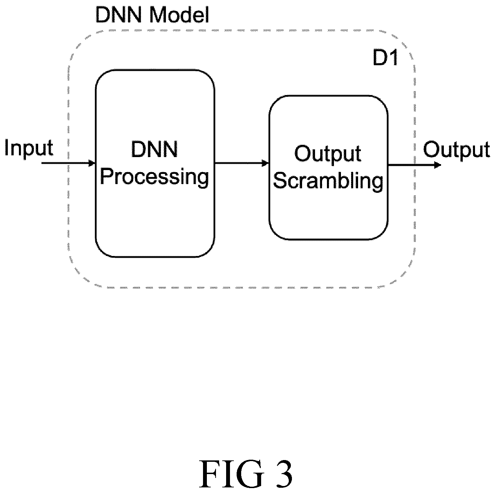

The output obfuscation/scrambling is included within the model and is part of the model file, Fig. 3.

In particular, Fig. 3 illustrates a DNN model according to an embodiment, which comprises a DNN processing module and an output scrambling module. The DNN processing module is a particular example for the machine-trained processing unit 120. The output scrambling module is a particular example of the output modification unit 130.

If the model can be visualized or the individual operations in the computational graph of the model can be listed, then the scrambling operation is visible, however, generally computational graphs comprise large number of operations and unless the user is aware of where to look for, it is extremely difficult to find.

The scrambling is designed such that even if the user can access the output of the DNN model explicitly, it is not evident what kind of scrambling is applied.

Embodiments may, e.g., be more effective if/when the DNN model operations cannot be visualized or listed.

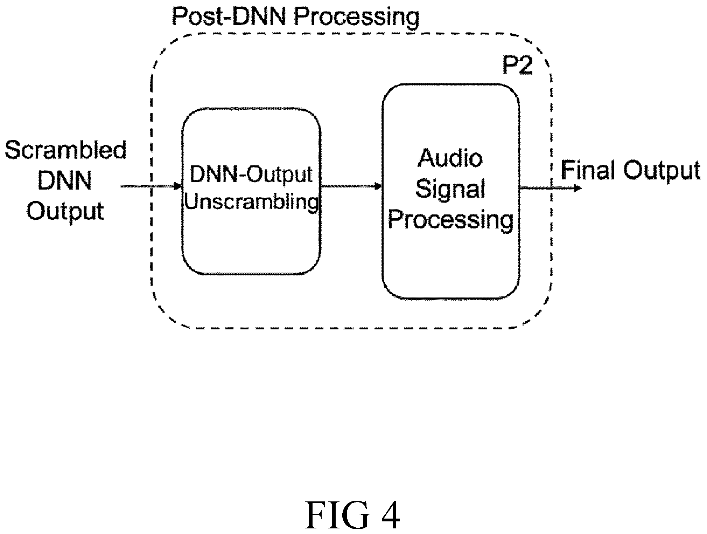

The unscrambling function is included in P2, post-DNN signal processing of Fig. 4. Since no source code is provided, the unscrambling procedure is not accessible for the user. Please note that the subsequent "Audio Signal Processing" block shown as part of P2 is optional.

Now, input scrambling/obfuscation according to embodiments is described.

An alternative to the output obfuscation/scrambling can be the scrambling/obfuscation of the input to the DNN. In this case, rather than obfuscating the output of the DNN, at first, the processed signal is obfuscated within the block P1, and then the unscrambling procedure is included within the DNN model.

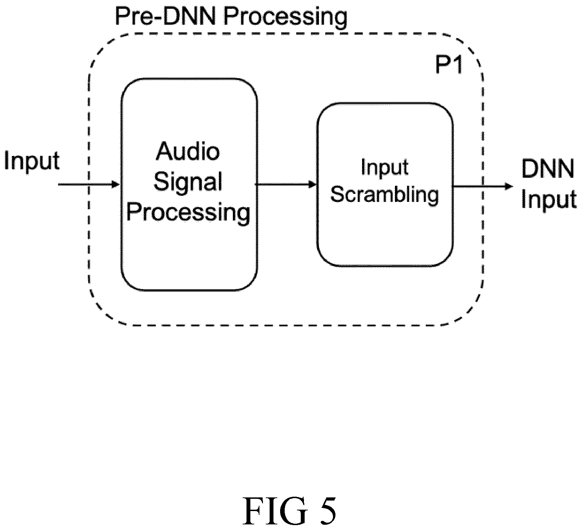

The scrambling is included now in the block P1, where the output of the pre-DNN audio signal processing is scrambled/obfuscated, which then serves as the input to the DNN, see Fig. 5.

In particular, Fig. 5 illustrates pre-DNN processing according to an embodiment.

It should be noted that the "Audio Signal Processing" block shown as part of P1 of Fig. 5 is optional.

Since no source code is provided, the scrambling procedure is not accessible to the user.

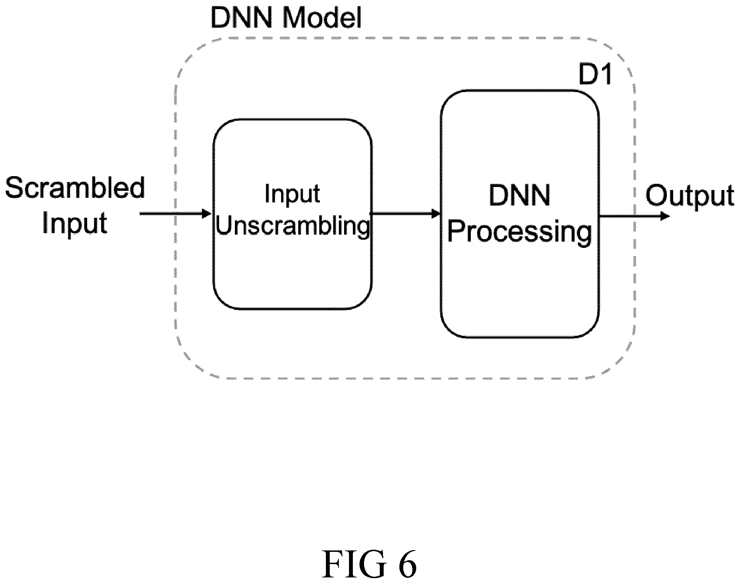

The unscrambling procedure, now included within the model, inverts the scrambling and provides the proper input to the DNN, see Fig. 6, which is required to obtain the desired output.

In particular, Fig. 6 illustrates a DNN model according to an embodiment, which comprises an input unscrambling module and a DNN processing module. The input unscrambling module is a particular example of the input reconstruction unit 110. The DNN processing module is a particular example for the machine-trained processing unit 120.

In this case, if an attempt is made at unauthorized usage of the model, the input unscrambling procedure, that is part of the DNN, actually ends up obfuscating/scrambling the provided input such that the DNN output is no longer the

In the following, particular embodiments are presented. It should be noted that though described mainly in the context of audio-processing, the methods can also be used for DNN models designed for other multi-dimensional inputs, e.g., image, video, text etc.

Now, a first particular embodiment is presented.

In the simplest embodiment of the method, the scrambling/obfuscation function f is a combination of invertible linear/non-linear operations applied the original output X

As an example:

$$Y = \sin(0.73 \cos(X) + 1.25)$$

In this case, the inverse function is given by:

$$X = cos^{-1}\left(\frac{sin^{-1}(Y) - 1.25}{0.73}\right)$$

In the following, a second particular embodiment is presented.

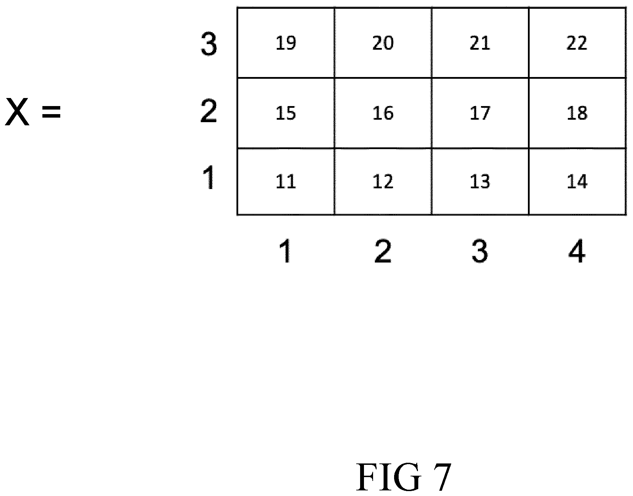

Fig. 7 illustrates a first two-dimensional vector of indices according to an embodiment. In particular, Fig. 7 illustrates the two-dimensional vector of indices X.

In the second embodiment, rather than applying a combination of operations to the elements of X, a vector of indices is created for each dimension of X; Id1, Id2, ..., IdN, where N is the total number of dimensions.

Then a specific set of operations are applied to each of these vectors of indices such that original indices for all the dimensions get reordered/shuffled.

In the case of Fig. 7, X is of size 3 x 4 (rows x columns).

Then,

$$Id1 = [1,2,3]$$

$$Id2 = [1,2,3,4]$$

Reordering procedure for both dimensions may, e.g., be conducted as follows:

1. Select odd and even indices to form two individual vectors and concatenate them.
2. Right shift the vector by two.

This results in:

$$Id1^* = 1.\ [1,3,2] \rightarrow 2.\ [3,2,1]$$

$$Id2^* = 1.\ [1,3,2,4] \rightarrow 2.\ [2,4,1,3]$$

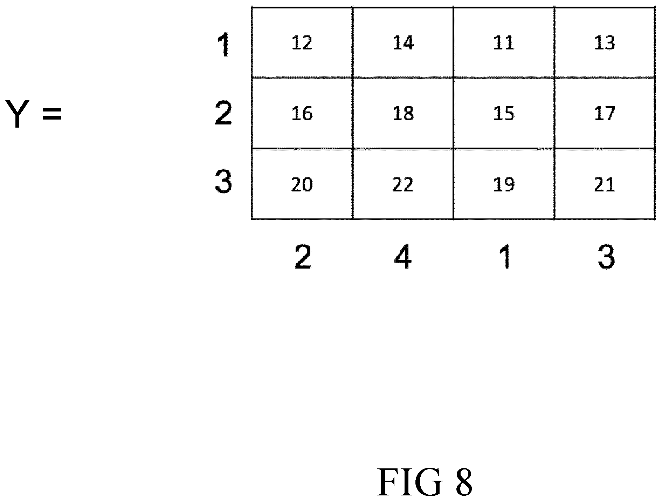

where, Id1* and Id2* are the reordered index vectors. When applied to X, one obtains a second two-dimensional vector of indices Y illustrated in Fig. 8.

Fig. 8 illustrates a second two-dimensional vector of indices according to an embodiment.

For the sake of simplicity, for Y illustrated in Fig. 8, the same reordering procedure is used for the index vectors of both the dimensions of the matrix X. In practice, different reordering procedure can be used for each dimension of X.

An advantage is that in case the DNN model can be visualized, the operations are similar to other mathematical operations that are part of the DNN processing making it difficult to identify the exact obfuscation/scrambling operation used.

Now, a third particular embodiment is presented.

In this embodiment, rather than using a set of linear operations for the task of randomization of the indices, fixed randomization vectors may, e.g., be employed that are pre-generated and can be different for vectors of indices for each dimension, e.g., time, time-frequency.

E.g., considering the example from the previous embodiment, where, a similar randomization of the indices of the two dimensions of X can be achieved by using randomization vectors rather than a reordering procedure.

$$Id1 = [1,2,3]$$

$$Id2 = [1,2,3,4]$$

In this embodiment, pre-computed randomization vectors may, e.g., be employed, which can be the same as the example in previous embodiment or a different one, e.g.,

$$R1 = [2,1,3]$$

$$R2 = [4,1,3,2]$$

Then,

$$Id1^* = [2,1,3]$$

$$Id2^* = [4,1,3,2].$$

An advantage is a proper randomization of the indices. Difficult to identify any form of structure or pattern in the scrambled output.

In the following, a fourth particular embodiment is presented.

The final embodiment can be a combination of the above-mentioned embodiments.

For example, one of the most suitable combinations would be the combination of Embodiment 1 and Embodiment 2/3.

An advantage in this case is the obfuscation of the elements of X along with randomization/reordering of the indices provides extra security to restrict the unauthorized usage of the DNN model.

In the following, further embodiments are described.

According to an embodiment that employs input scrambling, an audio input signal may, e.g., be received than can be, e.g., time or transform domain. Pre-processing to the audio signal may, e.g., be applied to scramble/obfuscate the input to the DNN model. The obfuscated input may, e.g., be fed to the DNN model. The obfuscation procedure may, e.g., be inverted inside the DNN model. DNN processing may, e.g., be applied, and the output of the DNN processing may, e.g., be obtained.

In an embodiment that employs output scrambling, an audio input signal may, e.g., be received than can be, e.g., time or transform domain. The input may, e.g., be fed to the DNN. DNN processing in a DNN model may, e.g., be applied. The result of the DNN processing within the DNN model may, e.g., be scrambled/obfuscated. The output of the DNN model my, e.g., be obtained, and the obfuscation procedure in the post-processing step may, e.g., be inverted.

According to an embodiment that employs input and output scrambling, an audio input signal may, e.g., be received than can be, e.g., represented in a time or transform domain. Pre-processing may, e.g., be applied to the audio signal to scramble/obfuscate the input to the DNN. The obfuscated input may, e.g., be fed to the DNN model. The obfuscation procedure inside the DNN model may, e.g., be inverted, and DNN processing in a DNN model may, e.g., be applied. The result of the DNN processing within the DNN model may, e.g., be scrambled/obfuscated. The output of the DNN model may, e.g., be obtained, and the obfuscation procedure may, e.g., be inverted in the post-processing step.

Regarding obfuscation/Scrambling, one of the above-described embodiments may, e.g., be employed.

In the following, particular embodiments are provided:

Embodiment 1: An apparatus comprising:

a machine-trained processing unit 120 for receiving first data and for generating resulting data from the first data;

wherein the apparatus further comprises:

an input reconstruction unit 110 configured to receive modified input data that has been generated from the first data according to a first modification rule, and configured to reconstruct the first data according to a first reconstruction rule from the modified input data, wherein the machine-trained processing unit 120 is configured to receive the first data from the input reconstruction unit 110; and/or

an output modification unit 130, wherein the machine-trained processing unit 120 is configured to feed the resulting data into the output modification unit 130; wherein the output modification unit 130 is configured to modify the resulting data according to a second modification rule to obtain and to output modified output data; wherein the output modification unit 130 is configured to generate the modified output data such that the resulting data is reconstructable from the modified output data by applying a second reconstruction rule on the modified output data.

Embodiment 2: An apparatus according to embodiment 1,

wherein the first data comprises a signal, such as audio or image/video or general sensor data;

and/or

wherein the apparatus comprises the output modification unit 130.

Embodiment 3: An apparatus according to embodiment 1 or 2,
wherein the resulting data comprises a natural signal, such as audio or image/video or general sensor data, and/or information on one or more properties of the first data.

Embodiment 4: An apparatus according to one of embodiments 1 to 3,

wherein, if the apparatus comprises the input reconstruction unit 110, the first modification rule comprises one or more scrambling steps, and the first reconstruction unit comprises one or more unscrambling steps;

wherein, if the apparatus comprises the output modification unit 130, the second modification rule comprises one or more scrambling steps, and the second reconstruction unit comprises one or more unscrambling steps.

Embodiment 5: An apparatus according to one of embodiments 1 to 4,

wherein, if the apparatus comprises the input reconstruction unit 110, the first modification rule comprises one or more encryption steps, and the first reconstruction unit comprises one or more decryption steps;

wherein, if the apparatus comprises the output modification unit 130, the second modification rule comprises one or more encryption steps, and the second reconstruction unit comprises one or more decryption steps.

Embodiment 6: An apparatus according to one of embodiments 1 to 5,

wherein the machine-trained processing unit 120 is a processing unit which comprises a neural network, and

wherein the neural network is configured to generate the processing output data from the processing input data.

Embodiment 7: An apparatus according to one of embodiments 1 to 6,
wherein the apparatus comprises the input reconstruction unit 110 and the output modification unit 130.

Embodiment 8: An apparatus according to one of embodiments 1 to 7,

wherein the first modification rule comprises one or more invertible linear operations and/or one or more invertible non-linear operations; and the first reconstruction rule comprises one or more further linear operations, which invert the one or more invertible linear operations, and/or one or more further non-linear operations, which invert the one or more invertible non-linear operations of the first modification rule; and/or

wherein the second modification rule comprises one or more invertible linear operations and/or one or more invertible non-linear operations; and the second reconstruction rule comprises one or more further linear operations, which invert the one or more invertible linear operations, and/or one or more further non-linear operations, which invert the one or more invertible non-linear operations of the second modification rule.

Embodiment 9: An apparatus according to embodiment 8,

wherein the first data comprises audio data, wherein the resulting data comprises information on one or more properties of the audio data, and

wherein at least one of the one or more non-linear operations of the first modification rule and/or of the second modification rule comprise one or more functions, for example, comprising a trigonometric function, and/or a power function, and/or a log function, and/or another function.

Embodiment 10: An apparatus according to one of embodiments 1 to 9,

wherein the first data exhibits one or more dimensions, wherein the first modification rule and the first reconstruction rule depend on the two or more dimensions of the first data; and/or wherein the resulting data exhibits two or more dimensions, wherein the second modification rule and the second reconstruction rule depend on the two or more dimensions of the resulting data.

Embodiment 11: An apparatus according to embodiment 10,

wherein each of the first data and of the modified input data comprises a plurality of data values;

wherein each data value of the plurality of data values of the first data and of the modified input data exhibits at least a first dimensional location with respect to a first dimension of the two or more dimensions and exhibits a second dimensional location with respect to a second dimension of the two or more dimensions; wherein the first reconstruction rule is defined such that by applying the first reconstruction rule on the modified input data, each of at least two data values of the plurality of data values of the modified input data is shifted from an initial first dimensional location to a different first dimensional location and from an initial second dimensional location to a different second dimensional location, to obtain the first data; and/or

wherein each of the resulting data and of the modified output data comprises a plurality of data values; wherein each data value of the plurality of data values of the resulting data and of the modified output data exhibits at least a first dimensional location with respect to a first dimension of the two or more dimensions and exhibits a second dimensional location with respect to a second dimension of the two or more dimensions; wherein the second modification rule is defined such that by applying the second modification rule on the resulting data, each of at least two data values of the plurality of data values of the resulting data is shifted from an initial first dimensional location to a different first dimensional location and from an initial second dimensional location to a different second dimensional location, to obtain the modified output data.

Embodiment 12: An apparatus according to embodiment 11,
wherein the first data is time-frequency audio data having time as the first dimension and having frequency as the second dimension; wherein the first reconstruction rule is defined to shift each of the at least two data values of the plurality of data values of the modified input data from an initial first dimensional location, being an initial time index or initial point-in-time, to a different first dimensional location, being a different time index or different point-in-time, and an initial second dimensional location, being an initial frequency index or initial frequency or initial frequency band, to a different second dimensional location, being a different frequency index or different frequency or different frequency band.

Embodiment 13: An apparatus according to embodiment 11 or 12,

wherein the first reconstruction rule defines how to scramble the plurality of data values of the modified input data to reconstruct the plurality of data values of the first data by defining two or more reordering steps, wherein each of the two or more reordering steps defines an updated first dimensional location with respect to the first dimension and an updated second dimensional location with respect to the second dimension for each of the plurality of data values of the modified input data; and/or

wherein the second modification rule defines how to scramble the plurality of data values of the resulting data to obtain the plurality of data values of the modified output data by defining two or more reordering steps, wherein each of the two or more reordering steps defines an updated first dimensional location with respect to the first dimension and an updated second dimensional location with respect to the second dimension for each of the plurality of data values of the resulting data.

Embodiment 14: An apparatus according to embodiment 13,

wherein each of the two or more reordering steps of the first reconstruction rule and/or of the second modification rule defines a scrambling of a plurality of indices of two or more index vectors to obtain an update of the two or more index vectors;
wherein each of the two or more index vectors is associated with a dimension of the two or more dimensions; and wherein each of the indices of one of the two or more index vectors are associated with a dimensional location within the dimension of said one of the two or more index vectors.

Embodiment 15: An apparatus according to embodiment 11 or 12,

wherein the first reconstruction rule defines how to scramble the plurality of data values of the modified input data to reconstruct the plurality of data values of the first data by defining a single reordering step, wherein said single reordering step defines an updated first dimensional location with respect to the first dimension and an updated second dimensional location with respect to the second dimension for each of the plurality of data values of the modified input data; and/or

wherein the second modification rule defines how to scramble the plurality of data values of the resulting data to obtain the plurality of data values of the modified output data by defining a single reordering step, wherein said single reordering step defines an updated first dimensional location with respect to the first dimension and an updated second dimensional location with respect to the second dimension for each of the plurality of data values of the resulting data.

Embodiment 16: An apparatus according to embodiment 15,
wherein said single reordering step of the first reconstruction rule and/or of the second reconstruction rule defines a scrambling of a plurality of indices of two or more predefined index vectors; wherein each of the two or more predefined index vectors is associated with a dimension of the two or more dimensions; and wherein each of the indices of one of the two or more predefined index vectors are associated with a dimensional location within the dimension of said one of the two or more index vectors.

Embodiment 17: A system comprising:

an apparatus according to one of embodiments 1 to 16, wherein the apparatus comprises the machine-trained processing unit 120 and further comprises the input reconstruction unit 110 and/or the output modification unit 130; and

a pre-processor and/or a post-processor;

wherein, if the apparatus comprises the input reconstruction unit 110, the system comprises the pre-processor being configured to generate the modified input data from the first data according to the first modification rule, and being configured to feed the modified input data into the input reconstruction unit 110 of the apparatus;

wherein, if the apparatus comprises the output modification unit 130, the system comprises the post-processor being configured to receive the modified output data from the output modification unit 130 of the apparatus, and being configured to reconstruct the resulting data from the modified output data according to the second reconstruction rule.

Embodiment 18: A method comprising:

receiving first data by a machine-trained processing unit 120 and generating resulting data from the first data by the machine-trained processing unit 120;

wherein the method further comprises receiving, by an input reconstruction unit 110, modified input data that has been generated from the first data according to a first modification rule, and reconstructing, by the input reconstruction unit 110, the first data according to a first reconstruction rule from the modified input data, wherein the machine-trained processing unit 120 receives the first data from the input reconstruction unit 110; and/or

wherein the method further comprises feeding the resulting data by the machine-trained processing unit 120 into an output modification unit 130; wherein the output modification unit 130 modifies the resulting data according to a second modification rule to obtain modified output data, and outputting the modified output data by the output modification unit 130, wherein generating the modified output data by the output modification unit 130 is conducted such that the resulting data is reconstructable from the modified output data by applying a second reconstruction rule on the modified output data.

Embodiment 19: A computer program for implementing the method of embodiment 18 when being executed on a computer or signal processor.

Embodiment 20: An apparatus comprising:

a machine-trained processing unit 120 for receiving first data and for generating resulting data from the first data;

wherein the apparatus further comprises:

an input reconstruction unit 110 configured to receive modified input data that has been generated from the first data according to a first modification rule, and configured to reconstruct the first data according to a first reconstruction rule from the modified input data, wherein the machine-trained processing unit 120 is configured to receive the first data from the input reconstruction unit 110; and/or

an output modification unit 130, wherein the machine-trained processing unit 120 is configured to feed the resulting data into the output modification unit 130; wherein the output modification unit 130 is configured to modify the resulting data according to a second modification rule to obtain and to output modified output data; wherein the output modification unit 130 is configured to generate the modified output data such that the resulting data is reconstructable from the modified output data by applying a second reconstruction rule on the modified output data;

wherein the first data exhibits one or more dimensions, wherein the first modification rule and the first reconstruction rule depend on the two or more dimensions of the first data; and/or wherein the resulting data exhibits two or more dimensions, wherein the second modification rule and the second reconstruction rule depend on the two or more dimensions of the resulting data.

Embodiment 21: An apparatus comprising:

a machine-trained processing unit 120 for receiving first data and for generating resulting data from the first data;

wherein the apparatus further comprises:

an input reconstruction unit 110 configured to receive modified input data that has been generated from the first data according to a first modification rule, and configured to reconstruct the first data according to a first reconstruction rule from the modified input data, wherein the machine-trained processing unit 120 is configured to receive the first data from the input reconstruction unit 110; and/or

an output modification unit 130, wherein the machine-trained processing unit 120 is configured to feed the resulting data into the output modification unit 130; wherein the output modification unit 130 is configured to modify the resulting data according to a second modification rule to obtain and to output modified output data; wherein the output modification unit 130 is configured to generate the modified output data such that the resulting data is reconstructable from the modified output data by applying a second reconstruction rule on the modified output data;

wherein the first data exhibits one or more dimensions, wherein the first modification rule and the first reconstruction rule depend on the two or more dimensions of the first data; and/or wherein the resulting data exhibits two or more dimensions, wherein the second modification rule and the second reconstruction rule depend on the two or more dimensions of the resulting data;

wherein each of the first data and of the modified input data comprises a plurality of data values; wherein each data value of the plurality of data values of the first data and of the modified input data exhibits at least a first dimensional location with respect to a first dimension of the two or more dimensions and exhibits a second dimensional location with respect to a second dimension of the two or more dimensions; wherein the first reconstruction rule is defined such that by applying the first reconstruction rule on the modified input data, each of at least two data values of the plurality of data values of the modified input data is shifted from an initial first dimensional location to a different first dimensional location and from an initial second dimensional location to a different second dimensional location, to obtain the first data; and/or

wherein each of the resulting data and of the modified output data comprises a plurality of data values; wherein each data value of the plurality of data values of the resulting data and of the modified output data exhibits at least a first dimensional location with respect to a first dimension of the two or more dimensions and exhibits a second dimensional location with respect to a second dimension of the two or more dimensions; wherein the second modification rule is defined such that by applying the second modification rule on the resulting data, each of at least two data values of the plurality of data values of the resulting data is shifted from an initial first dimensional location to a different first dimensional location and from an initial second dimensional location to a different second dimensional location, to obtain the modified output data.

Embodiment 22: An apparatus comprising:

a machine-trained processing unit 120 for receiving first data and for generating resulting data from the first data;

wherein the apparatus further comprises:

an input reconstruction unit 110 configured to receive modified input data that has been generated from the first data according to a first modification rule, and configured to reconstruct the first data according to a first reconstruction rule from the modified input data, wherein the machine-trained processing unit 120 is configured to receive the first data from the input reconstruction unit 110; and/or

an output modification unit 130, wherein the machine-trained processing unit 120 is configured to feed the resulting data into the output modification unit 130; wherein the output modification unit 130 is configured to modify the resulting data according to a second modification rule to obtain and to output modified output data; wherein the output modification unit 130 is configured to generate the modified output data such that the resulting data is reconstructable from the modified output data by applying a second reconstruction rule on the modified output data;

wherein the first data exhibits one or more dimensions, wherein the first modification rule and the first reconstruction rule depend on the two or more dimensions of the first data; and/or wherein the resulting data exhibits two or more dimensions, wherein the second modification rule and the second reconstruction rule depend on the two or more dimensions of the resulting data;

wherein each of the first data and of the modified input data comprises a plurality of data values; wherein each data value of the plurality of data values of the first data and of the modified input data exhibits at least a first dimensional location with respect to a first dimension of the two or more dimensions and exhibits a second dimensional location with respect to a second dimension of the two or more dimensions; wherein the first reconstruction rule is defined such that by applying the first reconstruction rule on the modified input data, each of at least two data values of the plurality of data values of the modified input data is shifted from an initial first dimensional location to a different first dimensional location and from an initial second dimensional location to a different second dimensional location, to obtain the first data; and/or wherein each of the resulting data and of the modified output data comprises a plurality of data values; wherein each data value of the plurality of data values of the resulting data and of the modified output data exhibits at least a first dimensional location with respect to a first dimension of the two or more dimensions and exhibits a second dimensional location with respect to a second dimension of the two or more dimensions; wherein the second modification rule is defined such that by applying the second modification rule on the resulting data, each of at least two data values of the plurality of data values of the resulting data is shifted from an initial first dimensional location to a different first dimensional location and from an initial second dimensional location to a different second dimensional location, to obtain the modified output data;

wherein the first data is time-frequency audio data having time as the first dimension and having frequency as the second dimension; wherein the first reconstruction rule is defined to shift each of the at least two data values of the plurality of data values of the modified input data from an initial first dimensional location, being an initial time index or initial point-in-time, to a different first dimensional location, being a different time index or different point-in-time, and an initial second dimensional location, being an initial frequency index or initial frequency or initial frequency band, to a different second dimensional location, being a different frequency index or different frequency or different frequency band;

wherein the first reconstruction rule defines how to scramble the plurality of data values of the modified input data to reconstruct the plurality of data values of the first data by defining two or more reordering steps, wherein each of the two or more reordering steps defines an updated first dimensional location with respect to the first dimension and an updated second dimensional location with respect to the second dimension for each of the plurality of data values of the modified input data; and/or wherein the second modification rule defines how to scramble the plurality of data values of the resulting data to obtain the plurality of data values of the modified output data by defining two or more reordering steps, wherein each of the two or more reordering steps defines an updated first dimensional location with respect to the first dimension and an updated second dimensional location with respect to the second dimension for each of the plurality of data values of the resulting data;

wherein each of the two or more reordering steps of the first reconstruction rule and/or of the second modification rule defines a scrambling of a plurality of indices of two or more index vectors to obtain an update of the two or more index vectors; wherein each of the two or more index vectors is associated with a dimension of the two or more dimensions; and wherein each of the indices of one of the two or more index vectors are associated with a dimensional location within the dimension of said one of the two or more index vectors.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus. Some or all of the method steps may be executed by (or using) a hardware apparatus, like for example, a microprocessor, a programmable computer or an electronic circuit. In some embodiments, one or more of the most important method steps may be executed by such an apparatus.

Depending on certain implementation requirements, embodiments of the invention can be implemented in hardware or in software or at least partially in hardware or at least partially in software. The implementation can be performed using a digital storage medium, for example a floppy disk, a DVD, a Blu-Ray, a CD, a ROM, a PROM, an EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may for example be stored on a machine readable carrier.

Other embodiments comprise the computer program for performing one of the methods described herein, stored on a machine readable carrier.

In other words, an embodiment of the inventive method is, therefore, a computer program having a program code for performing one of the methods described herein, when the computer program runs on a computer.

A further embodiment of the inventive methods is, therefore, a data carrier (or a digital storage medium, or a computer-readable medium) comprising, recorded thereon, the computer program for performing one of the methods described herein. The data carrier, the digital storage medium or the recorded medium are typically tangible and/or non-transitory.

A further embodiment of the inventive method is, therefore, a data stream or a sequence of signals representing the computer program for performing one of the methods described herein. The data stream or the sequence of signals may for example be configured to be transferred via a data communication connection, for example via the Internet.

A further embodiment comprises a processing means, for example a computer, or a programmable logic device, configured to or adapted to perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The apparatus described herein may be implemented using a hardware apparatus, or using a computer, or using a combination of a hardware apparatus and a computer.

The methods described herein may be performed using a hardware apparatus, or using a computer, or using a combination of a hardware apparatus and a computer.

The above described embodiments are merely illustrative for the principles of the present invention. It is understood that modifications and variations of the arrangements and the details described herein will be apparent to others skilled in the art. It is the intent, therefore, to be limited only by the scope of the impending patent claims and not by the specific details presented by way of description and explanation of the embodiments herein.

References:

[1] US 2019/370440 A1 - Protecting Deep Learning Models Using Watermarking.

[2] US 2020/210553 A1 - Protection Of Data And Deep Learning Models From Piracy And Unauthorized Uses.

Claims

1. An apparatus comprising:

   an input reconstruction unit (110) configured to receive modified input data that has been generated from first data according to a first modification rule, and configured to reconstruct the first data according to a first reconstruction rule from the modified input data, and
   a machine-trained processing unit (120) for receiving the first data from the input reconstruction unit (110), and configured for generating resulting data from the first data.

2. An apparatus according to claim 1,

   wherein the first data comprises a signal, such as audio or image/video or general sensor data; and/or
   wherein the resulting data comprises a natural signal, such as audio or image/video or general sensor data, and/or information on one or more properties of the first data.

3. An apparatus according to claim 1 or 2,

   wherein the first modification rule comprises one or more scrambling steps, and the first reconstruction unit comprises one or more unscrambling steps; and/or
   wherein the first modification rule comprises one or more encryption steps, and the first reconstruction unit comprises one or more decryption steps; and/or
   wherein the first modification rule comprises one or more invertible linear operations and/or one or more invertible non-linear operations; and the first reconstruction rule comprises one or more further linear operations, which invert the one or more invertible linear operations, and/or one or more further non-linear operations, which invert the one or more invertible non-linear operations of the first modification rule (for example: wherein the first data comprises audio data, wherein the resulting data comprises information on one or more properties of the audio data, and, wherein the first modification rule comprises one or more functions; for example, wherein the one or more functions comprise a trigonometric function, and/or a power function, and/or a log function, and/or another function).

4. An apparatus according to one of the preceding claims,
   wherein the first data exhibits one or more dimensions, wherein the first modification rule and the first reconstruction rule depend on the two or more dimensions of the first data.

5. An apparatus according to claim 4,
wherein each of the first data and of the modified input data comprises a plurality of data values; wherein each data value of the plurality of data values of the first data and of the modified input data exhibits at least a first dimensional location with respect to a first dimension of the two or more dimensions and exhibits a second dimensional location with respect to a second dimension of the two or more dimensions; wherein the first reconstruction rule is defined such that by applying the first reconstruction rule on the modified input data, each of at least two data values of the plurality of data values of the modified input data is shifted from an initial first dimensional location to a different first dimensional location and from an initial second dimensional location to a different second dimensional location, to obtain the first data.

6. An apparatus according to claim 5,
wherein the first data is time-frequency audio data having time as the first dimension and having frequency as the second dimension; wherein the first reconstruction rule is defined to shift each of the at least two data values of the plurality of data values of the modified input data from an initial first dimensional location, being an initial time index or initial point-in-time, to a different first dimensional location, being a different time index or different point-in-time, and an initial second dimensional location, being an initial frequency index or initial frequency or initial frequency band, to a different second dimensional location, being a different frequency index or different frequency or different frequency band.

7. An apparatus according to claim 5 or 6,
wherein the first reconstruction rule defines how to scramble the plurality of data values of the modified input data to reconstruct the plurality of data values of the first data by defining two or more reordering steps, wherein each of the two or more reordering steps defines an updated first dimensional location with respect to the first dimension and an updated second dimensional location with respect to the second dimension for each of the plurality of data values of the modified input data.

8. An apparatus according to claim 7,

wherein each of the two or more reordering steps of the first reconstruction rule defines a scrambling of a plurality of indices of two or more index vectors to obtain an update of the two or more index vectors; wherein each of the two or more index vectors is associated with a dimension of the two or more dimensions; and wherein each of the indices of one of the two or more index vectors are associated with a dimensional location within the dimension of said one of the two or more index vectors; and/or
wherein the first reconstruction rule defines how to scramble the plurality of data values of the modified input data to reconstruct the plurality of data values of the first data by defining a single reordering step, wherein said single reordering step defines an updated first dimensional location with respect to the first dimension and an updated second dimensional location with respect to the second dimension for each of the plurality of data values of the modified input data; and/or
wherein the first reconstruction rule defines how to scramble the plurality of data values of the modified input data to reconstruct the plurality of data values of the first data by defining a single reordering step, wherein said single reordering step defines an updated first dimensional location with respect to the first dimension and an updated second dimensional location with respect to the second dimension for each of the plurality of data values of the modified input data; wherein said single reordering step of the first reconstruction rule defines a scrambling of a plurality of indices of two or more predefined index vectors; wherein each of the two or more predefined index vectors is associated with a dimension of the two or more dimensions; and wherein each of the indices of one of the two or more predefined index vectors are associated with a dimensional location within the dimension of said one of the two or more index vectors.

9. An apparatus according to one of the preceding claims,
wherein the apparatus further comprises a pre-processor; being configured to generate the modified input data from the first data according to the first modification rule, and being configured to feed the modified input data into the input reconstruction unit (110) of the apparatus.

10. An apparatus according to one of the preceding claims,

wherein the apparatus further comprises an output modification unit (130),
wherein the machine-trained processing unit (120) is configured to feed the resulting data into the output modification unit (130);
wherein the output modification unit (130) is configured to modify the resulting data according to a second modification rule to obtain and to output modified output data,
wherein the output modification unit (130) is configured to generate the modified output data such that the resulting data is reconstructable from the modified output data by applying a second reconstruction rule on the modified output data.

11. An apparatus comprising:

a machine-trained processing unit (120) for receiving first data and for generating resulting data from the first data; and
an output modification unit (130),
wherein the machine-trained processing unit (120) is configured to feed the resulting data into the output modification unit (130);
wherein the output modification unit (130) is configured to modify the resulting data according to a second modification rule to obtain and to output modified output data;
wherein the output modification unit (130) is configured to generate the modified output data such that the resulting data is reconstructable from the modified output data by applying a second reconstruction rule on the modified output data.

12. An apparatus according to claim 10 or 11,

wherein the second modification rule comprises one or more scrambling steps, and the second reconstruction unit comprises one or more unscrambling steps; and/or
wherein the second modification rule comprises one or more encryption steps, and the second reconstruction unit comprises one or more decryption steps; and/or
wherein the second modification rule comprises one or more invertible linear operations and/or one or more invertible non-linear operations; and the second reconstruction rule comprises one or more further linear operations, which invert the one or more invertible linear operations, and/or one or more further non-linear operations, which invert the one or more invertible non-linear operations of the second modification rule.

13. An apparatus according to claim 10 or 11,

wherein the second modification rule comprises one or more invertible linear operations and/or one or more invertible non-linear operations; and the second reconstruction rule comprises one or more further linear operations, which invert the one or more invertible linear operations, and/or one or more further non-linear operations, which invert the one or more invertible non-linear operations of the second modification rule;
wherein the first data comprises audio data, wherein the resulting data comprises information on one or more properties of the audio data, and
wherein at least one of the one or more non-linear operations of the second modification rule comprise one or more functions; for example, wherein said one or more functions comprise a trigonometric function, and/or a power function, and/or a log function, and/or another function.

14. An apparatus according to one of claims 10 to 13, wherein the resulting data exhibits two or more dimensions, wherein the second modification rule and the second reconstruction rule depend on the two or more dimensions of the resulting data.

15. An apparatus according to claim 14,

wherein each of the resulting data and of the modified output data comprises a plurality of data values; wherein each data value of the plurality of data values of the resulting data and of the modified output data exhibits at least a first dimensional location with respect to a first dimension of the two or more dimensions and exhibits a second dimensional location with respect to a second dimension of the two or more dimensions; wherein the second modification rule is defined such that by applying the second modification rule on the resulting data, each of at least two data values of the plurality of data values of the resulting data is shifted from an initial first dimensional location to a different first dimensional location and from an initial second dimensional location to a different second dimensional location, to obtain the modified output data; and/or
wherein the second modification rule defines how to scramble the plurality of data values of the resulting data to obtain the plurality of data values of the modified output data by defining two or more reordering steps, wherein each of the two or more reordering steps defines an updated first dimensional location with respect to the first dimension and an updated second dimensional location with respect to the second dimension for each of the plurality of data values of the resulting data.

16. An apparatus according to claim 14,

wherein the second modification rule defines how to scramble the plurality of data values of the resulting data to obtain the plurality of data values of the modified output data by defining two or more reordering steps, wherein each of the two or more reordering steps defines an updated first dimensional location with respect to the first dimension and an updated second dimensional location with respect to the second dimension for each of the plurality of data values of the resulting data;
wherein each of the two or more reordering steps of the second modification rule defines a scrambling of a plurality of indices of two or more index vectors to obtain an update of the two or more index vectors; wherein each of the two or more index vectors is associated with a dimension of the two or more dimensions; and wherein each of the indices of one of the two or more index vectors are associated with a dimensional location within the dimension of said one of the two or more index vectors.

17. An apparatus according to claim 16,

wherein the second modification rule defines how to scramble the plurality of data values of the resulting data to obtain the plurality of data values of the modified output data by defining a single reordering step, wherein said single reordering step defines an updated first dimensional location with respect to the first dimension and an updated second dimensional location with respect to the second dimension for each of the plurality of data values of the resulting data; or
wherein the second modification rule defines how to scramble the plurality of data values of the resulting data to obtain the plurality of data values of the modified output data by defining a single reordering step, wherein said single reordering step defines an updated first dimensional location with respect to the first dimension and an updated second dimensional location with respect to the second dimension for each of the plurality of data values of the resulting data; wherein said single reordering step of the second reconstruction rule defines a scrambling of a plurality of indices of two or more predefined index vectors; wherein each of the two or more predefined index vectors is associated with a dimension of the two or more dimensions; and wherein each of the indices of one of the two or more predefined index vectors are associated with a dimensional location within the dimension of said one of the two or more index vectors.

18. An apparatus according to one of claims 10 to 17, wherein the apparatus further comprises a post-processor being configured to receive the modified output data from the output modification unit (130) of the apparatus, and being configured to reconstruct the resulting data from the modified output data according to the second reconstruction rule.

19. An apparatus according to one of the preceding claims,

wherein the machine-trained processing unit (120) is a processing unit which comprises a neural network, and
wherein the neural network is configured to generate the processing output data from the processing input data.

20. A method comprising:

receiving, by an input reconstruction unit (110), modified input data that has been generated from first data according to a first modification rule, and reconstructing, by the input reconstruction unit (110), the first data according to a first reconstruction rule from the modified input data, and
receiving the first data by a machine-trained processing unit (120) from the input reconstruction unit (110), and generating resulting data from the first data by the machine-trained processing unit (120).

21. A method comprising:

receiving first data by a machine-trained processing unit (120) and generating resulting data from the first data by the machine-trained processing unit (120); and
wherein the method further comprises feeding the resulting data by the machine-trained processing unit (120) into an output modification unit (130); wherein the output modification unit (130) modifies the resulting data according to a second modification rule to obtain modified output data, and outputting the modified output data by the output modification unit (130), wherein generating the modified output data by the output modification unit (130) is conducted such that the resulting data is reconstructable from the modified output data by applying a second reconstruction rule on the modified output data.

22. A computer program for implementing the method of claim 20 or 21 when being executed on a computer or signal processor.

FIG 1A

120

130

First
Data

Machine-trained
Processing Unit

Resulting
Data

Output
Modification
Unit

Modified
Output
Data

FIG 1B

FIG 1C

Audio Input → **Pre-DNN Signal processing** (P1) → **DNN Model** (D1) → **Post-DNN Signal Processing** (P2) → Output

FIG 2

FIG 3

Post-DNN Processing

Scrambled DNN Output → DNN-Output Unscrambling → Audio Signal Processing → Final Output

P2

FIG 4

FIG 5

FIG 6

$$X =$$

| | 1 | 2 | 3 | 4 |
|---|---|---|---|---|
| 3 | 19 | 20 | 21 | 22 |
| 2 | 15 | 16 | 17 | 18 |
| 1 | 11 | 12 | 13 | 14 |

FIG 7

$$Y = \begin{array}{c|cccc} & 2 & 4 & 1 & 3 \\ 1 & 12 & 14 & 11 & 13 \\ 2 & 16 & 18 & 15 & 17 \\ 3 & 20 & 22 & 19 & 21 \end{array}$$

FIG 8

EP 4 365 762 A1

Europäisches Patentamt
European Patent Office
Office européen des brevets

## EUROPEAN SEARCH REPORT

Application Number

EP 23 20 8315

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2020/151964 A1 (KONINKLIJKE PHILIPS NV [NL]) 30 July 2020 (2020-07-30) | 1-7, 11-16, 20-22 | INV.<br>G06F21/60<br>G06N3/08 |
| A | * paragraphs [0047], [0058] - [0063], [0076] *<br>* figures 2,4 * | 8-10, 17-19 | G06V10/82<br>H04L9/06 |
| X | ZHENG FEI ET AL: "Towards secure and practical machine learning via secret sharing and random permutation", KNOWLEDGE-BASED SYSTEMS, ELSEVIER, AMSTERDAM, NL, vol. 245, 23 March 2022 (2022-03-23), XP087026190, ISSN: 0950-7051, DOI: 10.1016/J.KNOSYS.2022.108609 [retrieved on 2022-03-23]<br>* Section 4 * | 1,11, 20-22 | |
| X | US 2019/044918 A1 (DOSHI KSHITIJ ARUN [US] ET AL) 7 February 2019 (2019-02-07)<br>* paragraphs [0025] - [0030] * | 1,11, 20-22 | TECHNICAL FIELDS SEARCHED (IPC) |
| X | US 2021/133577 A1 (SRINIVASAN SRIRAM [US] ET AL) 6 May 2021 (2021-05-06)<br>* paragraphs [0030] - [0032], [0062] * | 1,11, 20-22 | G06F<br>G06V<br>H04L<br>G06N |

The present search report has been drawn up for all claims

| Place of search | Date of completion of the search | Examiner |
|---|---|---|
| Munich | 26 February 2024 | Frank, Mario |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

28

## ANNEX TO THE EUROPEAN SEARCH REPORT
## ON EUROPEAN PATENT APPLICATION NO.

**EP 23 20 8315**

This annex lists the patent family members relating to the patent documents cited in the above-mentioned European search report.
The members are as contained in the European Patent Office EDP file on
The European Patent Office is in no way liable for these particulars which are merely given for the purpose of information.

**26-02-2024**

| Patent document cited in search report | | Publication date | Patent family member(s) | | Publication date |
|---|---|---|---|---|---|
| WO 2020151964 | A1 | 30-07-2020 | CN | 113632082 A | 09-11-2021 |
| | | | US | 2022019663 A1 | 20-01-2022 |
| | | | WO | 2020151964 A1 | 30-07-2020 |
| US 2019044918 | A1 | 07-02-2019 | CN | 110322012 A | 11-10-2019 |
| | | | EP | 3547183 A1 | 02-10-2019 |
| | | | US | 2019044918 A1 | 07-02-2019 |
| | | | US | 2022038437 A1 | 03-02-2022 |
| US 2021133577 | A1 | 06-05-2021 | US | 2021133577 A1 | 06-05-2021 |
| | | | US | 2023334322 A1 | 19-10-2023 |
| | | | WO | 2021086701 A1 | 06-05-2021 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2019370440 A1

- US 2020210553 A1